(19) Europäisches Patentamt
European Patent Office
Office européen des brevets

(11) EP 3 825 336 A1

(12) EUROPEAN PATENT APPLICATION
published in accordance with Art. 153(4) EPC

(43) Date of publication:
**26.05.2021 Bulletin 2021/21**

(21) Application number: **19837824.2**

(22) Date of filing: **17.07.2019**

(51) Int Cl.:
***C08F 214/22*** (2006.01) ***C08F 216/14*** (2006.01)
***C08F 220/22*** (2006.01)

(86) International application number:
**PCT/JP2019/028117**

(87) International publication number:
**WO 2020/017561 (23.01.2020 Gazette 2020/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **20.07.2018 JP 2018137092**
**20.07.2018 JP 2018137094**

(71) Applicant: **Kureha Corporation**
**Chuo-ku**
**Tokyo 103-8552 (JP)**

(72) Inventors:
- **SAKAKIBARA, Yukitaro**
**Tokyo 103-8552 (JP)**
- **WATANABE, Keisuke**
**Tokyo 103-8552 (JP)**
- **KOBAYASHI, Shota**
**Tokyo 103-8552 (JP)**

(74) Representative: **Zimmermann & Partner**
**Patentanwälte mbB**
**Postfach 330 920**
**80069 München (DE)**

# (54) PARTICULATE VINYLIDENE-FLUORIDE-BASED POLYMER AND METHOD FOR PRODUCING PARTICULATE VINYLIDENE-FLUORIDE-BASED POLYMER

(57) As a particulate vinylidene fluoride-based polymer having excellent solubility, provided is a particulate vinylidene fluoride-based polymer, a powder bulk density of vinylidene fluoride-based polymer being 0.5 g/mL or greater, and a content of particles having a degree of circularity of 0.8 or less being 50% or less.



Printed by Jouve, 75001 PARIS (FR)

## Description

### [TECHNICAL FIELD]

The present invention relates to a particulate vinylidene fluoride-based polymer and a production method thereof.

### [BACKGROUND ART]

The inside of particle of a vinylidene fluoride-based polymer produced by suspension polymerization tends to be porous. Because of this, the bulk density of the vinylidene fluoride-based polymer tends to decrease. When the bulk density of the vinylidene fluoride-based polymer is decreased, agitation failure occurs due to floating of the polymer during dissolution into a solvent, the solubility is deteriorated. Furthermore, a large bulkiness during storage or transportation leads to increase in production cost.

A plurality of methods for densifying a particulate vinylidene fluoride-based polymer obtained by suspension polymerization have been devised so far, and an example is a method of additionally adding vinylidene fluoride in a later stage of the suspension polymerization. However, in addition to requirement of incidental equipment such as a high-pressure pump, for example, this method has a problem of increase in scale adhesion (resin adhesion) in the polymerization system. Meanwhile, Patent Document 1 describes a method in which polymerization is performed by adding a secondary suspending agent.

### [Citation List]

### [Patent Document]

Patent Document 1: JP 2012-201866 A

### [SUMMARY OF INVENTION]

### [Technical Problem]

However, the method in which polymerization is performed by adding a secondary suspending agent described above has a problem of making the time required for the polymerization longer. Even with this method, the bulk density is not adequate, and as a result, a problem of insufficient solubility to a solvent occurs.

An object of the present invention is to provide a particulate vinylidene fluoride-based polymer having excellent solubility.

### [Solution to Problem]

To solve the problems described above, the particulate vinylidene fluoride-based polymer according to one aspect of the present invention has a powder bulk density of 0.5 g/mL or greater, and a content of particles having a degree of circularity of 0.8 or less of 50% or less.

Furthermore, to solve the problems described above, the method of producing a particulate vinylidene fluoride-based polymer according to one aspect of the present invention includes performing polymerization by adding a compound represented by Formula (4) below and vinylidene fluoride in a polymerization medium.

X-R ... (4)

In Formula (4), R is a hydrogen atom, a fluorine atom, or a polar functional group, and Formula X is an organic chain having 4 or more carbons and containing a unit of $(CF_2)_m$ (m is an integer of 2 or greater).

### [Advantageous Effects of Invention]

According to one aspect of the present invention, a particulate vinylidene fluoride-based polymer having excellent solubility can be provided.

### [BRIEF DESCRIPTION OF DRAWINGS]

FIG. 1 is a graph showing frequency of degree of circularity of measured particles according to Example 3.
FIG. 2 is a graph showing frequency of degree of circularity of measured particles according to Example 4.
FIG. 3 is a graph showing frequency of degree of circularity of measured particles according to Example 5.
FIG. 4 is a graph showing frequency of degree of circularity of measured particles according to Example 6.
FIG. 5 is a graph showing frequency of degree of circularity of measured particles according to Comparative Example 3.
FIG. 6 is a graph showing frequency of degree of circularity of measured particles according to Comparative Example 1.
FIG. 7 is a graph showing frequency of degree of circularity of measured particles according to Comparative Example 2.
FIG. 8 is a graph showing frequency of degree of circularity of measured particles according to Comparative Example 4.

## [DESCRIPTION OF EMBODIMENTS]

The particulate vinylidene fluoride-based polymer according to the present embodiment has a powder bulk density of 0.5 g/mL or greater, and a content of particles having a degree of circularity of 0.8 or less of 50% or less.

1. Vinylidene fluoride-based polymer

The vinylidene fluoride-based polymer according to the present embodiment is a particulate vinylidene fluoride-based polymer. Hereinafter, the particulate vinylidene fluoride-based polymer is simply described as "vinylidene fluoride-based polymer".

The vinylidene fluoride-based polymer according to an embodiment of the invention of the present application is not only limited to a homopolymer of vinylidene fluoride and may be a vinylidene fluoride copolymer (hereinafter, simply referred to as "copolymer") containing a structural unit derived from vinylidene fluoride and a structural unit derived from a monomer that is copolymerizable with the vinylidene fluoride.

In a case where the vinylidene fluoride-based polymer is a copolymer, the content of the structural unit derived from vinylidene fluoride in the vinylidene fluoride-based polymer is preferably from 80.00 mol% to 99.95 mol%, more preferably from 85.00 mol% to 99.95 mol%, and even more preferably from 90.00 mol% to 99.95 mol%, of the total amount of all structural units.

Monomer that is copolymerizable with vinylidene fluoride

The monomer that is copolymerizable with vinylidene fluoride (hereinafter, simply referred to as "comonomer") in the copolymer is not particularly limited as long as the comonomer can form a vinylidene fluoride copolymer having a powder bulk density of 0.5 g/mL or greater and a content of particles having a degree of circularity of 0.8 or less of 50% or less. Examples of the suitably used comonomer include fluorine-containing monomers, hydrocarbon-based monomers such as ethylene and propylene, acrylic acid-based monomers such as alkyl (meth)acrylate compounds and carboxy group-containing acrylate compounds, unsaturated dibasic acid derivative monomers such as maleic acid, monomethyl maleate, and dimethyl maleate, carboxylic acid anhydride group-containing monomers, and compounds having a structure represented by Formula (1) below. Among these, from the perspective of copolymerizability, an acrylic acid-based monomer and a fluorine-containing monomer are suitably used. Furthermore, from the perspective of effect on an environmental load, a compound having a structure represented by Formula (1) is suitably used.

[Chem. 1]

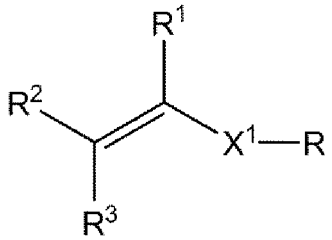

... (1)

In Formula (1), R is a hydrogen atom, a fluorine atom, or a polar functional group. Examples of the polar functional group include a hydroxy group, a carboxy group, a cyano group, an amino group, a nitro group, an ether group, and an ester

group, and a hydroxy group, a carboxy group, a cyano group, or an amino group is preferred, a cyano group or an amino group is more preferred, and a cyano group is particularly preferred.

$R^1$ is a hydrogen atom, a fluorine atom, a chlorine atom, or an alkyl group having from 1 to 5 carbons. As $R^1$, among these, a hydrogen atom, a fluorine atom, or a trifluoromethyl group is preferred, and a hydrogen atom or a fluorine atom is more preferred. $R^2$ and $R^3$ are each independently a hydrogen atom or a fluorine atom.

$X^1$ is an organic chain having 4 or more carbons and containing a unit of $(CF_2)_n$ (n is an integer of 2 or greater). The organic chain preferably contains a heteroatom. Examples of the heteroatom include an oxygen atom, a nitrogen atom, and a sulfur atom, and among these, an oxygen atom is preferred. n is preferably 3 or greater, more preferably 4 or greater, and even more preferably 5 or greater. The number of carbons is required to be 4 or greater but is preferably 5 or greater, and more preferably 6 or greater. One or more units of $(CF_2)_n$ are only required to be contained, and two or more units may be present by interposing another atomic group between the units.

Note that, in the present specification, "one or more units of $(CF_2)_n$ are contained" is intended to mean a state where, when $(CF_2)_n$ is taken as "one unit", one or more of the units are contained.

The compound represented by Formula (1) above is, more specifically, preferably a compound represented by Formula (2) or (3) below.

[Chem. 2]

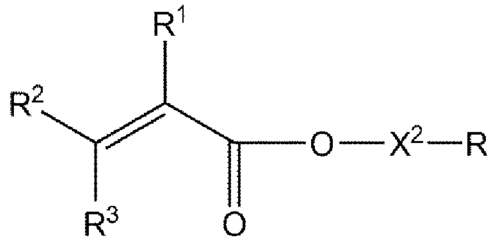

... (2)

[Chem. 3]

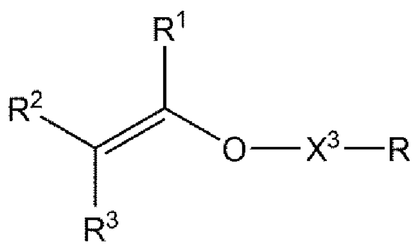

... (3)

In Formula (2), R, $R^1$, $R^2$, and $R^3$ are each respectively identical with R, $R^1$, $R^2$, and $R^3$ in Formula (1). $X^2$ is an organic chain having 3 or more carbons and containing a unit of $(CF_2)_n$ (n is an integer of 2 or greater). The number of carbons is required to be 3 or greater but is preferably 4 or greater, and more preferably 5 or greater.

In Formula (3), R, $R^1$, $R^2$, and $R^3$ are each respectively identical with R, $R^1$, $R^2$, and $R^3$ in Formula (1). $X^3$ is an organic chain having 4 or more carbons and containing a unit of $(CF_2)_n$ (n is an integer of 2 or greater). The number of carbons is required to be 4 or greater but is preferably 5 or greater, and more preferably 6 or greater.

In $X^2$ of Formula (2) and $X^3$ in (3), the organic chain preferably contains $(CF_2)_n$ (n is an integer of 4 or greater). n is preferably 3 or greater, more preferably 4 or greater, and even more preferably 5 or greater.

Preferred examples of the compound represented by Formula (2) include 2,2,3,3,4,4,5,5,6,6,7,7-dodecafluoroheptyl acrylate. Preferred examples of the compound represented by Formula (3) include 2,2,3,3,4,4,5,5,6,6-decafluoro-6-[(1,2,2-trifluorovinyl)oxy]hexane nitrile.

In a case where the compound represented by Formula (1) above is used as the comonomer, the content of the structural unit derived from the compound represented by Formula (1) in the vinylidene fluoride copolymer is preferably from 0.05 mol% to 10.00 mol%, more preferably from 0.10 mol% to 5.00 mol%, and even more preferably from 0.15 mol% to 2.00 mol%, of the total amount of all structural units.

Other monomer

In a case where the vinylidene fluoride-based polymer is a copolymer, the copolymer may further contain a structural unit derived from another monomer that is copolymerizable with vinylidene fluoride (hereinafter, simply referred to as "another monomer") in addition to the structural unit derived from the compound represented by Formula (1) above. Specific examples thereof include fluorine-containing monomers, hydrocarbon-based monomers such as ethylene and propylene, acrylic acid-based monomers such as alkyl (meth)acrylate compounds and carboxy group-containing acrylate compounds, unsaturated dibasic acid derivative monomers such as maleic acid, monomethyl maleate, and dimethyl maleate, and carboxylic acid anhydride group-containing monomers. From the perspective of copolymerizability, an acrylic acid-based monomer and a fluorine-containing monomer are preferred. One type of other monomers may be used alone, or two or more types may be used.

Examples of the fluorine-containing monomer include vinyl fluoride, trifluoroethylene, tetrafluoroethylene, chlorotrifluoroethylene, hexafluoropropylene, and perfluoroalkyl vinyl ethers represented by perfluoromethyl vinyl ether.

Examples of the unsaturated dibasic acid derivative monomer include maleic acid, citraconic acid, monomethyl maleate, dimethyl maleate, and monomethyl citraconate.

Examples of the alkyl (meth)acrylate compound include methyl (meth)acrylate, ethyl (meth)acrylate, n-propyl (meth)acrylate, n-butyl (meth)acrylate, t-butyl (meth)acrylate, n-hexyl (meth)acrylate, cyclohexyl (meth)acrylate, benzyl (meth)acrylate, chloromethyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate, 2,3,4,5-tetrahydroxypentyl (meth)acrylate, methyl 2-(hydroxymethyl)acrylate, and methyl 2-(hydroxyethyl)acrylate.

Examples of the carboxy group-containing acrylate compound include (meth)acrylic acid, 2-carboxyethyl acrylate, (meth)acryloyloxypropylsuccinic acid, (meth)acryloyloxyethylsuccinic acid, 2-hydroxyethyl acrylate, and hydroxypropyl acrylate.

In a case where the vinylidene fluoride-based polymer is a copolymer and another monomer described above is further contained as the comonomer, the content of the structural unit derived from such another monomer in the vinylidene fluoride-based polymer is preferably from 0.01 mol% to 10.00 mol%, more preferably from 0.01 mol% to 5.00 mol%, and even more preferably from 0.01 mol% to 2.00 mol%, of the total amount of all structural units.

2. Properties of vinylidene fluoride-based polymer

The vinylidene fluoride-based polymer according to the present embodiment is particulate. The average particle diameter of the vinylidene fluoride-based polymer according to the present embodiment is not particularly limited, but is typically from 1 to 1000 μm. The average particle diameter is preferably 10 μm or greater, more preferably 25 μm or greater, 50 μm or greater, 100 μm or greater, or 150 μm or greater. Furthermore, the average particle diameter of the vinylidene fluoride-based polymer is preferably 750 μm or less, and more preferably 500 μm or less.

Furthermore, the inherent viscosity of the vinylidene fluoride-based polymer according to the present embodiment is preferably a value in a range from 0.5 to 7.0 dL/g, more preferably a value in a range from 1.0 to 5.0 dL/g, and even more preferably a value in a range from 1.0 to 4.0 dL/g, from the perspective of adequately exhibiting chemical stability and mechanical strength of the vinylidene fluoride-based polymer particles. The inherent viscosity of the vinylidene fluoride-based polymer can be determined as the logarithmic viscosity at 30°C of a solution obtained by dissolving 4 g of resin in 1 liter of N,N-dimethylformamide.

The vinylidene fluoride-based polymer according to the present embodiment can be produced by suspension polymerization described below.

Bulk density

The powder bulk density of the vinylidene fluoride-based polymer according to the present embodiment is 0.50 g/mL or greater. The powder bulk density is preferably high and, specifically, preferably 0.60 g/mL or greater, more preferably 0.65 g/mL or greater, and even more preferably 0.70 g/mL or greater. The upper limit of the powder bulk density is not limited and may be, for example, 1.5 g/mL or less.

The "bulk density" in the present specification is a value measured based on the measurement method of "Bulk specific gravity" described in JIS K 6721-3.3. Specifically, a sample is dropped onto a receiver by using a bulk specific gravity measuring apparatus to measure the mass, and the bulk density is determined by the following equation.

$$S = (C - A)/B$$

S: Bulk density ($g/cm^3$)

A: Mass of receiver (g)
B: Internal volume of receiver ($cm^3$)
C: Mass of receiver containing sample (g)

When the bulk density of the vinylidene fluoride-based polymer is high, the total number of particles per unit mass is reduced. Thus, the collision frequency of particles during dissolution can be suppressed. By this, formation of lumps that are less likely to be dissolved in a solvent can be suppressed, and thus solubility in the solvent is improved. Furthermore, when the bulk density is high, that is, when the weight per unit volume is high, cost for storage and transportation can be suppressed.

Degree of circularity

In the vinylidene fluoride-based polymer according to the present embodiment, the content of particles having a degree of circularity of 0.8 or less is 50% or less.

The "degree of circularity" in the present specification is a parameter indicating the degree of similarity between the actually measured shape of the particle of the vinylidene fluoride-based polymer according to an embodiment of the present invention and a circle. That is, the degree of circularity represents how close the shape of the particle is to a sphere. The degree of circularity is used as a method for expressing the shape of the particles quantitatively, and is an indicator to represent the level of surface irregularities of the particles quantitatively. That is, the degree of circularity is 1 when the shape of the particle has the shape identical (congruent) to the circle, and the value thereof becomes smaller as the similarity between the shape and the circle decreases.

The degree of circularity can be calculated by, for example, using a circularity calculation device. An example of the circularity calculation device is a circularity calculation device including an imaging part, an image analysis processing part, and a circularity calculating part, and the degree of circularity can be calculated as follows.

The imaging part is only required to be able to photograph particles, and examples thereof include a CCD camera and an optical microscope. The imaging part may be incorporated in a device that includes the image analysis processing part and the circularity calculating part described below (e.g. computer) or may be an independent device. Note that the number of particles taken by the imaging part is preferably approximately 5000.

The image analysis processing part calculates the data indicating the particle diameter of a particle when the taken particle is supposed to be a circle (hereinafter, "particle diameter D") and the data indicating the circumference (hereinafter, "circumference C"), based on the picture image obtained by the imaging part. More specifically, each area S of the particle in the picture image is calculated, and the particle diameter D is calculated by substituting the value of the calculated area S in the equation ($D = 2 \times (S/\pi)^{1/2}$).

The circularity calculating part is a part which calculates the degree of circularity based on the particle diameter D and the circumference C calculated in the image analysis processing part. First, the circularity calculating part calculates the data showing individual degree of circularity of taken image of each particle (hereinafter, "individual degree of circularity $\varphi'$"). The individual degree of circularity $\varphi'$ is a value comparing the value of circumference determined from the particle diameter D (the value of the circumference of a particle when the particle is supposed to be a circle) and the actually measured circumference C. That is, if the actual particle is a circle, the value of circumference of the presumed value and the circumference C becomes the same value. The circularity calculating part calculates the individual degree of circularity $\varphi'$ by substituting the particle diameter D and the circumference C in the equation ($\varphi' = D\pi/C$).

The data showing the average value of the degrees of circularity (hereinafter, "degree of circularity $\varphi$") is calculated based on the calculated individual degree of circularity $\varphi'$. Furthermore, the circularity calculating part obtains the data showing each frequency of the calculated individual degree of circularity $\varphi'$ as the frequency value.

In the vinylidene fluoride-based polymer according to the present embodiment, the content of particles having a degree of circularity of 0.8 or less is preferably small. Specifically, the content is preferably 50% or less, more preferably 30% or less, and even more preferably 10% or less.

When the degree of circularity is high, formation of a secondary particle of particles can be suppressed. The vinylidene fluoride-based polymer according to the present embodiment can suppress formation of huge lumps due to suppression of formation of secondary particles because, as a whole, the proportion of particles having high degree of circularity is high. As a result, solubility in a solvent is improved.

Particle sedimentation

The vinylidene fluoride-based polymer according to the present embodiment is preferably a vinylidene fluoride-based polymer that settles down in ion-exchanged water. Note that, in the present specification, "settle down in ion-exchanged water" refers to a state where, when ion-exchanged water and a vinylidene fluoride-based polymer are charged in a weight ratio of 20:1 in a container at room temperature, then agitated, and allowed to stand still for 5 minutes, the vinylidene fluoride-based polymer is present at a position not higher than 1/2 the liquid height.

The proportion of the vinylidene fluoride-based polymer settling down in ion-exchanged water is preferably 70 mass% of greater, more preferably 80 mass% or greater, and even more preferably 90 mass% or greater.

By reducing the number of particles that do not settle down, agitation failure due to floating can be suppressed, and formation of huge lumps can be suppressed. As a result, solubility in a solvent is improved.

Cumulative pore volume

The vinylidene fluoride-based polymer according to the present embodiment has a cumulative pore volume of preferably 0.5 mL/g or less, more preferably 0.35 mL/g or less, and even more preferably 0.25 mL/g or less.

The "cumulative pore volume" in the present specification is a value determined by mercury intrusion porosimetry using a mercury porosimeter. As the mercury porosimeter, for example, AutoPore IV 9500 available from Micromeritics can be used.

A smaller cumulative pore volume indicates less pores or smaller pores or both. Thus, a smaller cumulative pore volume makes the total number of particles per unit mass smaller. Thus, collision frequency of particles during dissolution can be suppressed. Furthermore, a smaller cumulative pore volume can prevent floating and suppress agitation failure due to the floating. As a result of these described above, formation of huge lumps can be suppressed, and solubility in a solvent can be enhanced.

3. Production of vinylidene fluoride-based polymer

The vinylidene fluoride-based polymer according to the present embodiment that satisfies the conditions of the powder bulk density and the degree of circularity described above can be obtained by suspension polymerization, and can be obtained by adding a compound having a structure represented by Formula (4) below and vinylidene fluoride in a polymerization medium during polymerization.

X-R ... (4)

In Formula (4), R is a hydrogen atom, a fluorine atom, or a polar functional group. Examples of the polar functional group include a hydroxy group, a carboxy group, a cyano group, an amino group, a nitro group, an ether group, and an ester group, and a hydroxy group, a carboxy group, a cyano group, or an amino group is preferred, a cyano group or an amino group is more preferred, and a cyano group is particularly preferred.

X is an organic chain having 4 or more carbons and containing a unit of $(CF_2)_m$ (m is an integer of 2 or greater). m is preferably 3 or greater, more preferably 4 or greater, and even more preferably 5 or greater. One or more units of $(CF_2)_m$ are only required to be contained, and two or more units may be present by interposing another atomic group between the units.

Furthermore, the organic chain represented by X may contain a heteroatom such as oxygen and nitrogen. The heteroatom may be contained in the main chain of this organic chain or may be contained in a side chain.

The compound represented by Formula (4) is preferably a compound represented by Formula (1) or (5) below.

[Chem. 4]

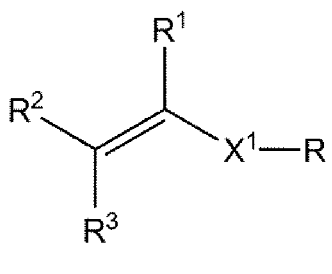

... (1)

$X^4$-R ... (5)

In Formula (1), R, $R^1$, $R^2$, $R^3$, and $X^1$ are as described above. R is identical with R in Formula (4). Furthermore, the compound represented by Formula (1) is preferably a compound represented by Formula (2) or (3) described above. Note that, for Formula (2) or (3), repeated description is omitted.

In Formula (5), R is identical with R in Formulas (1) and (4). $X^4$ is a fluorine-substituted alkyl group having from

4 to 15 carbons and containing a unit of $(CF_2)_n$ (n is an integer of 2 or greater). n is preferably 3 or greater, more preferably 4 or greater, and even more preferably 5 or greater. One or more units of $(CF_2)_n$ are only required to be contained, and two or more units may be present by interposing another atomic group between the units. Specifically, $X^4$ is preferably a fluorine-substituted alkyl group, and more preferably a perfluoroalkyl group.

Preferred examples of the compound represented by Formula (5) above include perfluoroalkyl nitrile, perfluoroalkyl carboxylic acid, and perfluoro polyether. The compound represented by Formula (5) is preferably perfluoroalkyl nitrile, and specific examples thereof include pentadecafluorooctane nitrile and nonadecafluorodecane nitrile.

The added amount of the compound represented by Formula (5) into the polymerization medium is preferably from 0.1 to 20.0 parts by mass, more preferably from 0.2 to 10.0 parts by mass, and even more preferably from 0.2 to 5.0 parts by mass, per 100 parts by mass total of the polymerization medium. Furthermore, when the total amount of the vinylidene fluoride (optionally, mixture further containing another monomer) used in the polymerization is 100 parts by mass, the added amount of the compound represented by Formula (5) is preferably from 0.1 to 50.0 parts by mass, more preferably from 0.1 to 25.0 parts by mass, and even more preferably from 0.1 to 2.0 parts by mass from the perspective of polymerization reactivity and effect on an environmental load.

Suspending agent

In the method of producing the vinylidene fluoride-based polymer in the present embodiment, a suspending agent is used.

The suspending agent is not particularly limited, and cellulose derivatives, such as methyl cellulose, methoxylated methyl cellulose, propoxylated methyl cellulose, hydroxyethyl cellulose, hydroxypropyl cellulose, hydroxypropyl methyl cellulose, and hydroxyethyl methyl cellulose, polyvinyl alcohol, polyethylene oxide, and gelatin can be used.

As the suspending agent, a cellulose derivative is preferably used, and methyl cellulose, hydroxyethyl cellulose, and hydroxypropyl methyl cellulose are preferred.

The used amount of the suspending agent is preferably 0.02 parts by mass or greater and less than 0.25 parts by mass, more preferably 0.03 parts by mass or greater and less than 0.2 parts by mass, and particularly preferably from 0.05 parts by mass to 0.1 parts by mass, per 100 parts by mass of all the main component used during the suspension polymerization (which refers to a mixture of a compound having a structure represented by Formula (1) and vinylidene fluoride or refers to a mixture of a compound having a structure represented by Formula (4) and vinylidene fluoride, and in both cases, another monomer may be optionally contained but the suspending agent is not included. Hereinafter, simply referred to as "main component"). Within the range described above, the suspended particles of the monomers are stable and less air bubbles are generated, which are preferred.

Polymerization medium

In the method of producing the vinylidene fluoride-based polymer in the present embodiment, suspension polymerization is performed by dispersing the main component in a polymerization medium.

As the polymerization medium, water or an aqueous medium, which is a mixed medium of water and hydrocarbon, is preferred. As the mixed medium of water and hydrocarbon, mixed media of water and a halogenated hydrocarbon medium, such as 1,1,2,2,3-pentafluoro-1,3-dichloropropane, 1,1,1,2,2-pentafluoro-3,3-dichloropropane, or monohydropentafluoro dichloropropane, where the amount of water is 70 mass% or greater, can be used. As the aqueous medium, water is preferred. As the water, use of purified water, such as ion-exchanged water or pure water, is preferred.

The used amount of the aqueous medium when the suspension polymerization is performed is preferably from 100 to 1000 parts by mass, and more preferably from 200 to 500 parts by mass, per 100 parts by mass of all the main component.

Suspension polymerization

In the method of producing the vinylidene fluoride-based polymer in the present embodiment, suspension polymerization is performed by dispersing in an aqueous medium containing a main component and a suspending agent.

In the suspension polymerization, a polymerization initiator is typically used, and examples of the polymerization initiator include, diisopropyl peroxy dicarbonate, dinormal propyl peroxy dicarbonate, dinormal heptafluoropropyl peroxy dicarbonate, diisopropyl peroxydicarbonate, isobutyryl peroxide, di(chlorofluoroacyl)peroxide, di(perfluoroacyl)peroxide, and t-butyl peroxy pivalate. The used amount thereof is from 0.05 to 5 parts by mass, and preferably from 0.1 to 2 parts by mass, per 100 parts by mass of all the main component used in the suspension polymerization.

Additionally, a chain transfer agent such as ethyl acetate, methyl acetate, diethyl carbonate, acetone, ethanol, n-propanol, acetaldehyde, propylaldehyde, ethyl propionate, or carbon tetrachloride may be added to adjust the degree of polymerization of the obtained vinylidene fluoride-based polymer. The used amount thereof is typically from 0.1 to 5

parts by mass, and preferably from 0.4 to 3 parts by mass, per 100 parts by mass of all the main component used in the suspension polymerization.

Furthermore, the polymerization temperature T in the suspension polymerization is selected as appropriate according to the 10-hour half-life temperature $T_{10}$ of the polymerization initiator, and is typically selected in a range of $T_{10}$ - 25°C ≤ T ≤ $T_{10}$ + 25°C. For example, $T_{10}$ of t-butyl peroxy pivalate and diisopropyl peroxy dicarbonate are 54.6°C and 40.5°C, respectively. Therefore, in polymerization using t-butyl peroxy pivalate and diisopropyl peroxy dicarbonate as a polymerization initiator, the polymerization temperature T is selected as appropriate in a range of 29.6°C ≤ T ≤ 79.6°C or 15.5°C ≤ T ≤ 65.5°C, respectively. The polymerization time is not particularly limited, but not longer than 100 hours is preferred taking the productivity into consideration. The pressure during polymerization is normally higher than normal pressure, and is preferably from 2.0 to 8.0 MPa-G.

In a case where the suspension polymerization is performed by using the compound represented by Formula (1) as the compound represented by Formula (4), the resulting vinylidene fluoride-based polymer is a copolymer containing a structural unit derived from vinylidene fluoride and a structural unit derived from the compound represented by Formula (1). Meanwhile, in a case where the suspension polymerization is performed by using the compound represented by Formula (5) as the compound represented by Formula (4), the resulting vinylidene fluoride-based polymer is a homopolymer or a copolymer except the copolymers obtained in a case where the compound represented by Formula (1) is used.

4. Use of vinylidene fluoride-based polymer

The vinylidene fluoride-based polymer obtained in the production method according to an embodiment of the present invention can be used in various applications in which vinylidene fluoride-based polymers obtained by known production methods are used. That is, the vinylidene fluoride-based polymer obtained by the production method according to an embodiment of the present invention may be used as a raw material to produce various films and molded products by melt-molding or may be used as a paint or a binder resin.

Furthermore, this binder resin can be used as an electrode by being coated on an electrode active material to bind the electrode active material to a current collector.

Furthermore, an electrode on which the binder resin has been coated can be used in a non-aqueous electrolyte secondary battery representatively exemplified by a lithium ion battery.

5. Summary

As is clear from the above descriptions, the present invention includes the following.

A particulate vinylidene fluoride-based polymer, a powder bulk density being 0.5 g/mL or greater, and a content of particles having a degree of circularity of 0.8 or less being 50% or less.

Furthermore, the particulate vinylidene fluoride-based polymer, where 70 mass% or greater of entire particles settle down in ion-exchanged water.

Furthermore, the particulate vinylidene fluoride-based polymer, where a cumulative pore volume measured by a mercury porosimeter is 0.5 mL/g or less.

Furthermore, the particulate vinylidene fluoride-based polymer, where the vinylidene fluoride-based polymer contains a structural unit derived from a monomer that is copolymerizable with vinylidene fluoride, and the monomer contains a compound represented by Formula (1) below.

[Chem. 5]

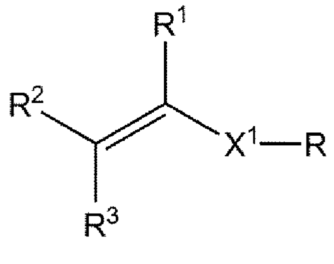

... (1)

In Formula (1), R is a hydrogen atom, a fluorine atom, or a polar functional group, $R^1$ is a hydrogen atom, a fluorine atom, or an alkyl group having from 1 to 5 carbons, $R^2$ and $R^3$ are each independently a hydrogen atom or a fluorine

atom, and $X^1$ is an organic chain having 4 or more carbons and containing a unit of $(CF_2)_n$ (n is an integer of 2 or greater).

Furthermore, the particulate vinylidene fluoride-based polymer, where the compound represented by Formula (1) is a compound represented by Formula (2) or (3) below.

[Chem. 6]

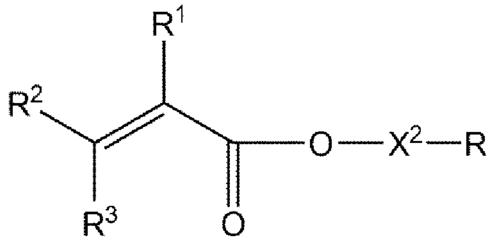

... (2)

In Formula (2), R, $R^1$, $R^2$, and $R^3$ are each respectively identical with R, $R^1$, $R^2$, and $R^3$ in Formula (1), and $X^2$ is an organic chain having 3 or more carbons and containing a unit of $(CF_2)_n$ (n is an integer of 2 or greater).

[Chem. 7]

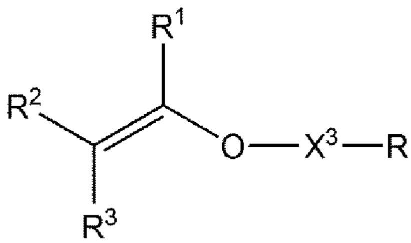

... (3)

In Formula (3), R, $R^1$, $R^2$, and $R^3$ are each respectively identical with R, $R^1$, $R^2$, and $R^3$ in Formula (1), and $X^3$ is an organic chain having 4 or more carbons and containing a unit of $(CF_2)_n$ (n is an integer of 2 or greater).

Furthermore, the particulate vinylidene fluoride-based polymer, where the organic chain contains $(CF_2)_n$ (n is an integer of 4 or greater).

Furthermore, the particulate vinylidene fluoride-based polymer, where R is a hydroxy group, a carboxy group, a cyano group, or an amino group.

Furthermore, the particulate vinylidene fluoride-based polymer, further including a structural unit derived from an acrylic acid-based monomer or a fluorine-containing monomer.

Furthermore, the particulate vinylidene fluoride-based polymer, where an amount of structural unit derived from vinylidene fluoride in the vinylidene fluoride-based polymer is from 90.00 mol% to 99.95 mol% of a total amount of all structural units.

Furthermore, the method of producing a particulate vinylidene fluoride-based polymer, including performing polymerization by adding a compound represented by Formula (4) below and vinylidene fluoride in a polymerization medium.

X-R ... (4)

In Formula (4), R is a hydrogen atom, a fluorine atom, or a polar functional group, and Formula X is an organic chain having 4 or more carbons and containing a unit of $(CF_2)_m$ (m is an integer of 2 or greater).

Furthermore, a method of producing a particulate vinylidene fluoride-based polymer, the compound represented by Formula (4) being a compound represented by Formula (1) or (5) below.

[Chem. 8]

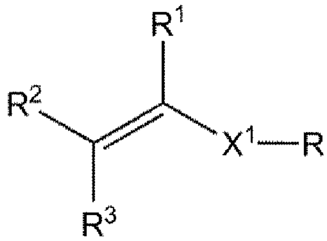

... (1)

In Formula (1), R is identical with R in (4), $R^1$ is a hydrogen atom, a fluorine atom, or an alkyl group having from 1 to 5 carbons, $R^2$ and $R^3$ are each independently a hydrogen atom or a fluorine atom, and $X^1$ is an organic chain having 4 or more carbons and containing a unit of $(CF_2)_n$ (n is an integer of 2 or greater).

$X^4$-R ... (5)

In Formula (5), R is identical with R in Formula (4), and $X^4$ is a fluorine-substituted alkyl group having from 4 to 15 carbons and containing a unit of $(CF_2)_n$ (n is an integer of 2 or greater).

Furthermore, the method of producing a particulate vinylidene fluoride-based polymer, where the polymerization medium is water.

Embodiments of the present invention will be described in further detail hereinafter using examples. The present invention is of course not limited to the examples below, and it goes without saying that various aspects are possible for the details. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

**[Examples]**

[Example 1]

In an autoclave with an internal volume of 2 liters, 1240 g of ion-exchanged water, 0.4 g of Metolose SM-100 (available from Shin-Etsu Chemical Co., Ltd.) as a suspending agent, 4 g of pentadecafluorooctane nitrile (available from Tokyo Chemical Industry Co., Ltd., hereinafter, PFON), 2.4 g of 50 wt.% di-i-propyl peroxydicarbonate (IPP)-freon 225cb solution as a polymerization initiator, and 370 g of vinylidene fluoride (VDF) were charged, and the temperature was increased to 45°C. Then, the temperature was maintained at 45°C. Polymerization was performed for a total of 8 hours from the start of temperature increase. After polymerization was completed, the polymer slurry was heat-treated for 60 minutes at 95°C. The polymer slurry was then filtered, washed with water, and dried further at 80°C for 20 hours to obtain a vinylidene fluoride-based polymer.

[Example 2]

In an autoclave with an internal volume of 2 liters, 1240 g of ion-exchanged water, 0.4 g of Metolose SM-100 (available from Shin-Etsu Chemical Co., Ltd.) as a suspending agent, 4 g of pentadecafluorooctane nitrile (available from Tokyo Chemical Industry Co., Ltd.), 0.4 g of acryloyloxyethyl succinic acid (hereinafter, AES), 2.4 g of 50 wt.% di-i-propyl peroxydicarbonate (IPP)-freon 225cb solution as a polymerization initiator, and 370 g of vinylidene fluoride (VDF) were charged, and the temperature was increased to 45°C. Then, a 4 wt.% AES aqueous solution was then gradually added at a rate of 0.4 g/min while the temperature was maintained at 45°C. A total of 4 g of AES was added, including the initially added amount. Polymerization was performed for a total time from the start of temperature increase. After polymerization was completed, the polymer slurry was heat-treated for 60 minutes at 95°C. The polymer slurry was then filtered, washed with water, and dried further at 80°C for 20 hours to obtain a vinylidene fluoride-based polymer.

[Example 3]

The same operation as in Example 1 was performed except for using 2,2,3,3,4,4,5,5,6,6-decafluoro-6-[(1,2,2-trifluorovinyl)oxy]hexane nitrile (available from Tokyo Chemical Industry Co., Ltd.) (hereinafter, 3FO10FCN) in place of the PFON in the charging process.

[Example 4]

The same operation as in Example 1 was performed except for using 2 g of 3FO10FCN in place of 4 g of the PFON in the charging process.

[Example 5]

The same operation as in Example 1 was performed except for using 3 g of 3FO10FCN in place of 4 g of the PFON in the charging process, adding 0.4 g of acryloyloxyethyl succinic acid (hereinafter, AES), and adding a 4 wt.% AES aqueous solution at a rate of 0.4 g/min while the temperature was maintained at 45°C. Note that a total of 4 g of AES was added, including the initially added amount.

[Example 6]

The same operation as in Example 1 was performed except for using 2,2,3,3,4,4,5,5,6,6,7,7-dodecafluoroheptyl acrylate (available from Tokyo Chemical Industry Co., Ltd.) in place of the PFON in the charging process.

[Comparative Example 1]

In an autoclave with an internal volume of 2 liters, 1050 g of ion-exchanged water, 0.2 g of Metolose SM-100 (available from Shin-Etsu Chemical Co., Ltd.) as a suspending agent, 1.2 g of 50 wt.% di-i-propyl peroxy dicarbonate (IPP)-Freon 225cb solution as a polymerization initiator, 1.8 g of ethyl acetate (available from Kanto Chemical Co., Inc.) as a chain transfer agent, and 410 g of vinylidene fluoride (VDF) were charged, and the temperature was increased to 26°C. Then, the temperature was maintained at 26°C. Polymerization was performed for a total of 12 hours from the start of temperature increase. After polymerization was completed, the polymer slurry was heat-treated for 60 minutes at 95°C. The polymer slurry was then filtered, washed with water, and dried further at 80°C for 20 hours to obtain a vinylidene fluoride-based polymer.

[Comparative Example 2]

In an autoclave with an internal volume of 2 liters, 1050 g of ion-exchanged water, 0.4 g of AES, 0.2 g of Metolose SM-100 (available from Shin-Etsu Chemical Co., Ltd.) as a suspending agent, 3.3 g of 50 wt.% di-i-propyl peroxy dicarbonate (IPP)-Freon 225cb solution as a polymerization initiator, 1.5 g of ethyl acetate (available from Kanto Chemical Co., Inc.) as a chain transfer agent, and 410 g of vinylidene fluoride (VDF) were charged, and the temperature was increased to 26°C. Then, a 5 wt.% AES aqueous solution was then gradually added at a rate of 0.1 g/min while the temperature was maintained at 26°C. A total of 4.1 g of AES was added, including the initially added amount. Polymerization was performed for a total of 12 hours from the start of temperature increase. After polymerization was completed, the polymer slurry was heat-treated for 60 minutes at 95°C. The polymer slurry was then filtered, washed with water, and dried further at 80°C for 20 hours to obtain a vinylidene fluoride-based polymer.

[Comparative Example 3]

In an autoclave with an internal volume of 2 liters, 1024 g of ion-exchanged water, 0.2 g of Metolose SM-100 (available from Shin-Etsu Chemical Co., Ltd.) as a suspending agent, 0.4 g of sorbitan trioleate (hereinafter, span85) as an additive, 0.6 g of 50 wt.% di-i-propyl peroxy dicarbonate (IPP)-Freon 225cb solution as a polymerization initiator, 1.8 g of ethyl acetate (available from Kanto Chemical Co., Inc.) as a chain transfer agent, and 400 g of vinylidene fluoride (VDF) were charged, and the temperature was increased to 26°C. Then, the temperature was maintained at 26°C. Polymerization was performed for a total of 79 hours from the start of temperature increase. After polymerization was completed, the polymer slurry was heat-treated for 60 minutes at 95°C. The polymer slurry was then filtered, washed with water, and dried further at 80°C for 20 hours to obtain a vinylidene fluoride-based polymer.

[Comparative Example 4]

The same operation as in Example 1 was performed except for using perfluoropropoxyethylene (available from Tokyo Chemical Industry Co., Ltd.) in place of the PFON in the charging process.

The polymerization formula of each of Examples and Comparative Examples is shown in Table 1.

Table 1

| | VDF (part) | Additive | | Comonomer | | | Water (part) | Initiator (part) | Chain transfer agent (part) | Suspending agent (part) | Polymerization temperature (°C) |
|---|---|---|---|---|---|---|---|---|---|---|---|
| | | Type | Amount (part) | Type | Amount (part) | Method | | | | | |
| Example 1 | 100 | PFON | 1 | - | - | - | 329 | 0.5 | 0 | 0.10 | 45 |
| Example 2 | 100 | PFON | 1 | AES | 1 | Continuous | 329 | 0.5 | 0 | 0.10 | 45 |
| Example 3 | 100 | 3FO10FCN | 1 | - | - | - | 329 | 0.5 | 0 | 0.10 | 45 |
| Example 4 | 100 | 3FO10FCN | 0.5 | - | - | - | 329 | 0.5 | 0 | 0.10 | 45 |
| Example 5 | 100 | 3FO10FCN | 0.75 | AES | 1 | Continuous | 310 | 0.5 | 0 | 0.10 | 45 |
| Example 6 | 100 | Dodecafluoroheptyl acrylate | 1 | - | - | - | 329 | 0.5 | 0 | 0.10 | 45 |
| Comparative Example 1 | 100 | - | - | - | - | - | 256 | 0.3 | 0.45 | 0.05 | 26 |
| Comparative Example 2 | 100 | - | - | AES | 1 | Continuous | 256 | 0.8 | 0.38 | 0.05 | 26 |
| Comparative Example 3 | 100 | Span85 | 0.1 | - | - | - | 256 | 0.3 | 0.45 | 0.05 | 26 |
| Comparative Example 4 | 100 | - | - | Perfluoropropoxyethylene | 1 | Batch | 329 | 0.5 | 0 | 0.10 | 45 |

Measurement of physical properties

(Bulk density)

The "bulk density" of the vinylidene fluoride-based polymer was measured based on the measurement method of "Bulk specific gravity" described in JIS K 6721-3.3. Specifically, a powder sample that was mixed adequately was charged in a funnel with a damper, and then damper was taken out rapidly to drop the sample onto a receiver. The sample protruded from the receiver was scraped with a glass rod, and then the mass of the receiver containing the sample was weighed, and the bulk density was determined by the following equation.

$$S = (C - A)/B$$

S: Bulk density (g/cm$^3$)
A: Mass of receiver (g)
B: Internal volume of receiver (cm$^3$)
C: Mass of receiver containing sample (g)
The results are shown in Table 2.

Particle sedimentation

The particle sedimentation property of the vinylidene fluoride-based polymer was measured as described below. After 100 mL of ion-exchanged water was charged in a 100 mL beaker, 5 g of vinylidene fluoride-based polymer was charged, agitated, and then allowed to stand still for 5 minutes. Thereafter, the weight of particles present at a position not higher than 1/2 the liquid height was measured. The results are shown in Table 2.

Degree of circularity

The degree of circularity of the vinylidene fluoride-based polymer was calculated as follows using a circularity calculation device (VHX-5000, available from Keyence Corporation).

First, 3000 particles of the vinylidene fluoride-based polymer particles were photographed, and the data indicating the particle diameter of a particle when the taken particle is supposed to be a circle (hereinafter, "particle diameter D") and the data indicating the circumference (hereinafter, "circumference C") were calculated.

Then, the data indicating the projected area of each particle in the picture image (hereinafter, "area S") was obtained, and the particle diameter D was calculated based on the data. More specifically, each area S of the particle in the picture image was calculated, and the particle diameter D was calculated by substituting the value of the calculated area S in the equation ($D = 2 \times (S/\pi)^{1/2}$).

Furthermore, each degree of circularity $\varphi$ was calculated from (value of circumference determined from particle diameter D/circumference C). Specifically, calculation was performed by substituting the particle diameter D and the circumference C in the equation ($\varphi = D\pi/C$).

A graph showing the frequency of the degrees of circularity $\varphi$ of the measured particles was obtained, and the proportion of the particles having a degree of circularity of 0.8 or less was determined. The results are shown in Table 2. Furthermore, graphs each showing the frequency of the degree of circularity $\varphi$ of the measured particles were shown in FIGS. 1 to 8. FIGS. 1 to 4 are respectively graphs for Examples 3 to 6, and FIGS. 5 to 8 are respectively graphs for Comparative Examples 3, 1, 2, and 4. The horizontal axis shows the degree of circularity $\varphi$, and the vertical axis shows the proportion of the particles relative to all the measured particles.

Pore volume

The pore volume was measured by using a mercury porosimeter (AutoPore IV 9500, available from Micromeritics). The measurement method is as follows.

The vinylidene fluoride-based polymer particles were charged in a sample container, and degassed for 30 minutes under a pressure of 2.67 Pa or lower. Then, mercury was introduced into the sample container, pressure was gradually increased, and the mercury was allowed to penetrate into the pores of the particles (maximum pressure: 414 MPa). From the relationship between pressure and mercury penetration quantity at this time, the pore volume distribution of the particles was measured using the calculation equation below. Specifically, the volume of mercury that penetrated the particles was measured from a pressure equivalent to pore diameter 89 $\mu$m (0.01 MPa) to the maximum pressure (414 MPa, equivalent to pore diameter 3 nm). In the calculation of pore diameter, when mercury penetrates into the

pores of a cylinder having a diameter (D) at a pressure (P), and the surface tension of mercury is taken as "$\gamma$" and the contact angle between mercury and the pore wall is taken as "$\theta$," the following equation holds true:$-\pi D\gamma\cos\theta=\pi(D/2)2\cdot P$ Therefore, $D = (-4\gamma\cos\theta)/P$.

The surface tension of mercury was taken as 484 dyne/cm and the contact angle between mercury and carbon was taken as 130 degrees. When the pressure P was expressed in MPa and the pore diameter D was expressed in $\mu$m, the relationship between the pressure P and the pore diameter D was determined by using the following equation: D = 1.27/P. The results are shown in Table 2.

Solubility test

In a 50 mL container, 37.6 g of N-methyl-2-pyrrolidone was charged and heated at 50°C. While stirring was performed by a stirring bar, 2.40 g of the vinylidene fluoride-based polymer was charged, and a time required for dissolution was measured while the temperature was maintained at 50°C. The results are shown in Table 2.

[Table 2]

| | Bulk density [g/cm$^3$] | Proportion of settled particles (mass%) | Proportion of particles having degree of circularity of 0.8 or less (%) | Pore volume (mL/g) | Dissolution time (min) |
|---|---|---|---|---|---|
| Example 1 | 0.72 | 70≤ | 19 | 0.21 | 90 |
| Example 2 | 0.58 | 70≤ | 48 | 0.21 | 110 |
| Example 3 | 0.80 | 70≤ | 3.2 | 0.16 | 70 |
| Example 4 | 0.63 | 70≤ | 5 | 0.43 | 300 |
| Example 5 | 0.68 | 70≤ | 2.5 | 0.35 | 120 |
| Example 6 | 0.60 | 70≤ | 10.4 | 0.22 | 120 |
| Comparative Example 1 | 0.34 | 70> | 18.9 | 0.62 | Not dissolved |
| Comparative Example 2 | 0.43 | 70> | 7 | 0.61 | Not dissolved |
| Comparative Example 3 | 0.53 | 70> | 65 | 0.3 | Not dissolved |
| Comparative Example 4 | 0.36 | 70> | 4.2 | 0.96 | Not dissolved |

**[Industrial Applicability]**

The present invention can be utilized in a technical field where a vinylidene fluoride-based polymer is used as a raw material.

## Claims

**1.** A particulate vinylidene fluoride-based polymer,
a powder bulk density being 0.5 g/mL or greater, and
a content of particles having a degree of circularity of 0.8 or less being 50% or less.

**2.** The particulate vinylidene fluoride-based polymer according to claim 1, wherein 70 mass% or greater of entire particles settle down in ion-exchanged water.

**3.** The particulate vinylidene fluoride-based polymer according to claim 1 or 2, wherein a cumulative pore volume measured by a mercury porosimeter is 0.5 mL/g or less.

**4.** The particulate vinylidene fluoride-based polymer according to any one of claims 1 to 3, wherein

the vinylidene fluoride-based polymer contains a structural unit derived from a monomer that is copolymerizable with vinylidene fluoride, and
the monomer contains a compound represented by Formula (1):

[Chem. 1]

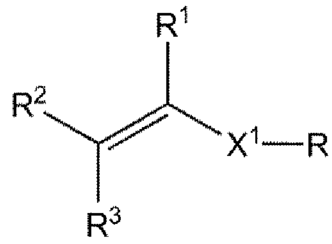

... (1)

where R is a hydrogen atom, a fluorine atom, or a polar functional group, $R^1$ is a hydrogen atom, a fluorine atom, or an alkyl group having from 1 to 5 carbons, $R^2$ and $R^3$ are each independently a hydrogen atom or a fluorine atom, and $X^1$ is an organic chain having 4 or more carbons and containing a unit of $(CF_2)_n$, n being an integer of 2 or greater.

**5.** The particulate vinylidene fluoride-based polymer according to claim 4, wherein the compound represented by Formula (1) is a compound represented by Formula (2) or (3):

[Chem. 2]

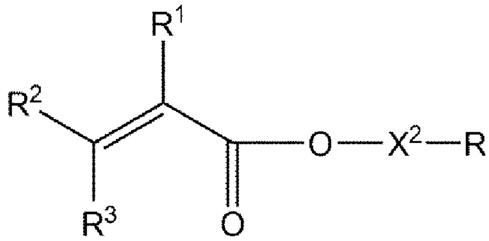

... (2)

where R, $R^1$, $R^2$, and $R^3$ are each respectively identical with R, $R^1$, $R^2$, and $R^3$ in Formula (1), and $X^2$ is an organic chain having 3 or more carbons and containing a unit of $(CF_2)_n$, n being an integer of 2 or greater, and

[Chem. 3]

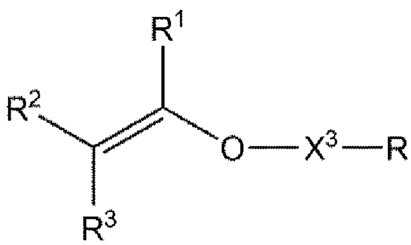

... (3)

where R, $R^1$, $R^2$, and $R^3$ are each respectively identical with R, $R^1$, $R^2$, and $R^3$ in Formula (1), and $X^3$ is an organic chain having 4 or more carbons and containing a unit of $(CF_2)_n$, n being an integer of 2 or greater.

**6.** The particulate vinylidene fluoride-based polymer according to claim 4 or 5, wherein the organic chain contains $(CF_2)_n$, n being an integer of 4 or greater.

7. The particulate vinylidene fluoride-based polymer according to any one of claims 4 to 6, wherein the R moiety is a hydroxy group, a carboxy group, a cyano group, or an amino group.

8. The particulate vinylidene fluoride-based polymer according to any one of claims 1 to 7, further comprising a structural unit derived from an acrylic acid-based monomer or a fluorine-containing monomer.

9. The particulate vinylidene fluoride-based polymer according to any one of claims 1 to 8, wherein an amount of structural unit derived from vinylidene fluoride in the vinylidene fluoride-based polymer is from 90.00 mol% to 99.95 mol% of a total amount of all structural units.

10. A method of producing a particulate vinylidene fluoride-based polymer,
the method producing the particulate vinylidene fluoride-based polymer according to any one of claims 1 to 9,
the method comprising performing polymerization by adding a compound represented by Formula (4) and vinylidene fluoride in a polymerization medium:

X-R ... (4)

where R is a hydrogen atom, a fluorine atom, or a polar functional group, and Formula X is an organic chain having 4 or more carbons and containing a unit of $(CF_2)_m$, m being an integer of 2 or greater.

11. A method of producing a particulate vinylidene fluoride-based polymer, the compound represented by Formula (4) being a compound represented by Formula (1) or (5):

[Chem. 4]

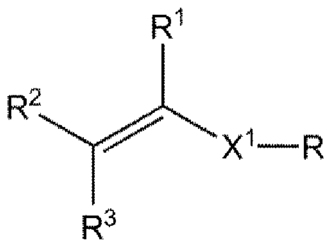

... (1)

where R is identical with R in (4), $R^1$ is a hydrogen atom, a fluorine atom, or an alkyl group having from 1 to 5 carbons, $R^2$ and $R^3$ are each independently a hydrogen atom or a fluorine atom, and $X^1$ is an organic chain having 4 or more carbons and containing a unit of $(CF_2)_n$, n being an integer of 2 or greater, and

$X^4$-R ... (5)

where R is identical with R in Formula (4), and $X^4$ is a fluorine-substituted alkyl group having from 4 to 15 carbons and containing a unit of $(CF_2)_n$, n being an integer of 2 or greater.

12. The method of producing a particulate vinylidene fluoride-based polymer according to claim 10 or 11, wherein the polymerization medium is water.

[FIG. 1]

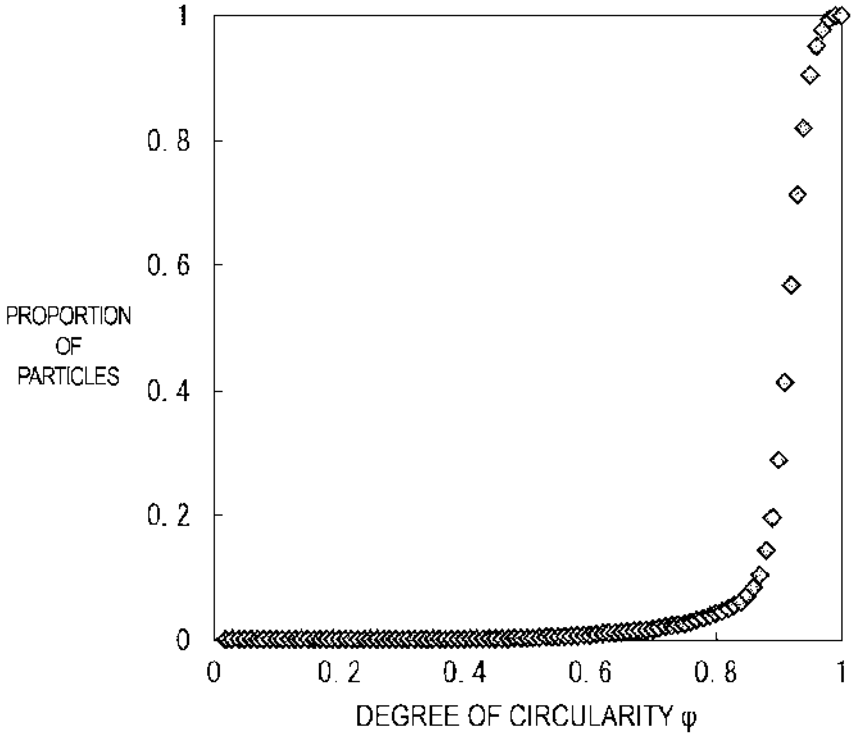
PROPORTION
OF
PARTICLES
1
0. 8
0. 6
0. 4
0. 2
0
0
0. 2
0. 4
0. 6
0. 8
1
DEGREE OF CIRCULARITY φ

[FIG. 2]

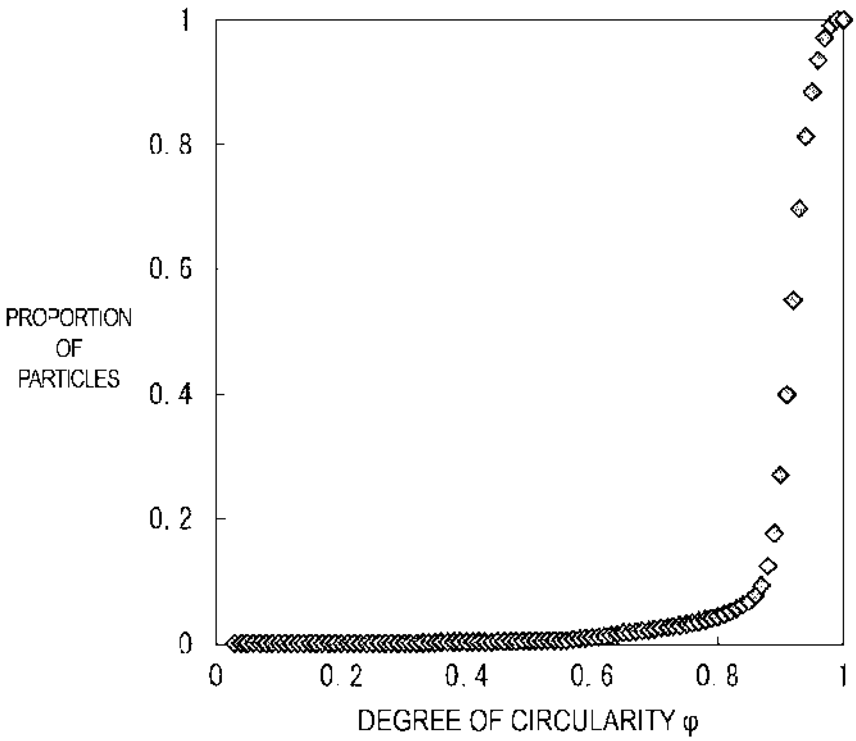
PROPORTION
OF
PARTICLES
1
0. 8
0. 6
0. 4
0. 2
0
0
0. 2
0. 4
0. 6
0. 8
1
DEGREE OF CIRCULARITY φ

[FIG. 3]

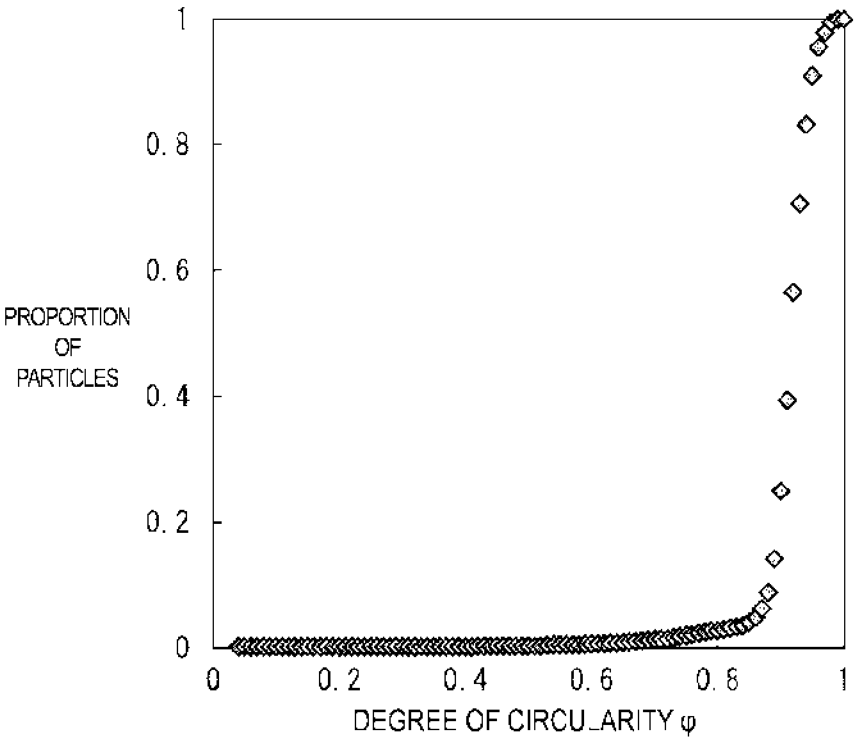
PROPORTION OF PARTICLES
DEGREE OF CIRCULARITY φ
0
0. 2
0. 4
0. 6
0. 8
1

[FIG. 4]

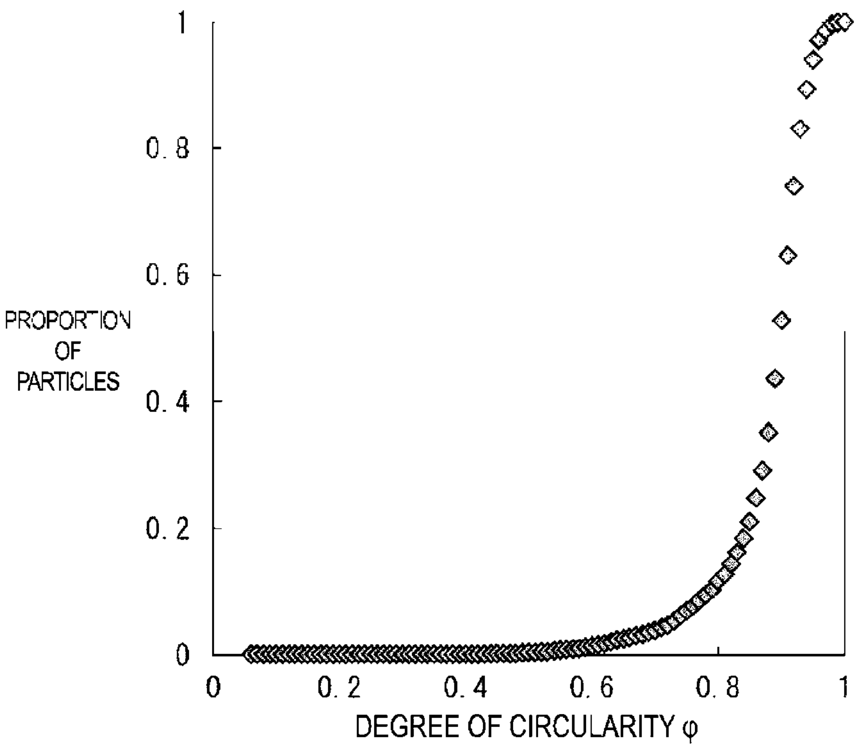
PROPORTION OF PARTICLES
DEGREE OF CIRCULARITY φ
0
0. 2
0. 4
0. 6
0. 8
1

[FIG. 5]

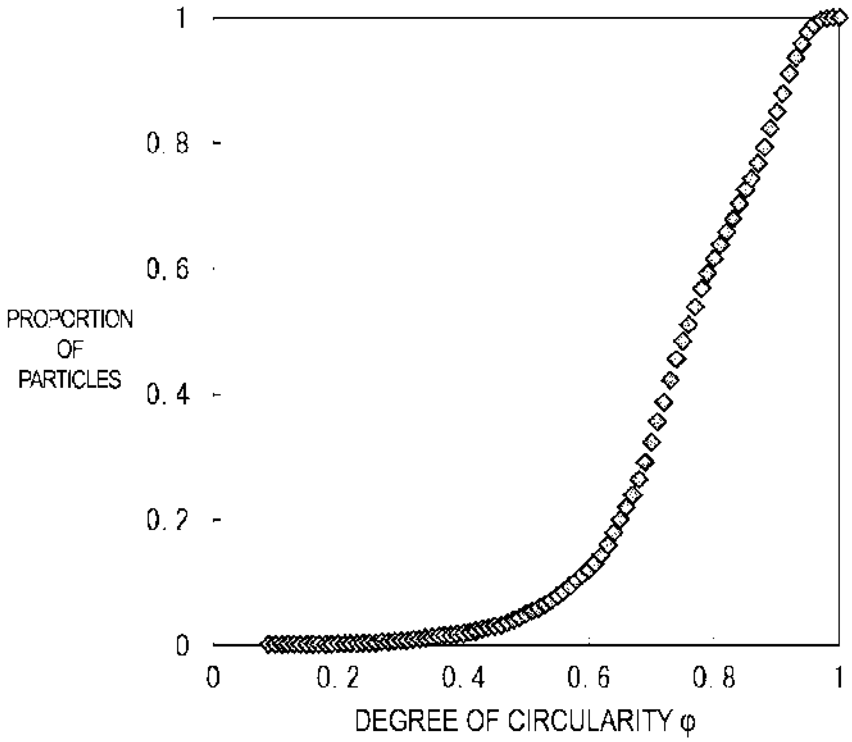
1
0.8
0.6
PROPORTION
OF
PARTICLES
0.4
0.2
0
0
0.2
0.4
0.6
0.8
1
DEGREE OF CIRCULARITY φ

[FIG. 6]

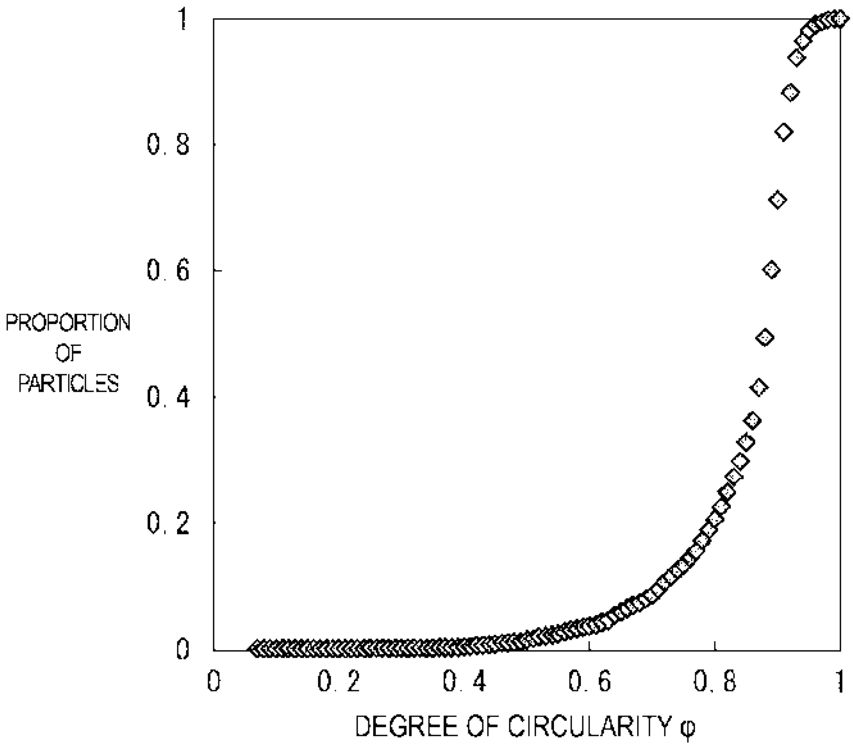
1
0.8
0.6
PROPORTION
OF
PARTICLES
0.4
0.2
0
0
0.2
0.4
0.6
0.8
1
DEGREE OF CIRCULARITY φ

[FIG. 7]

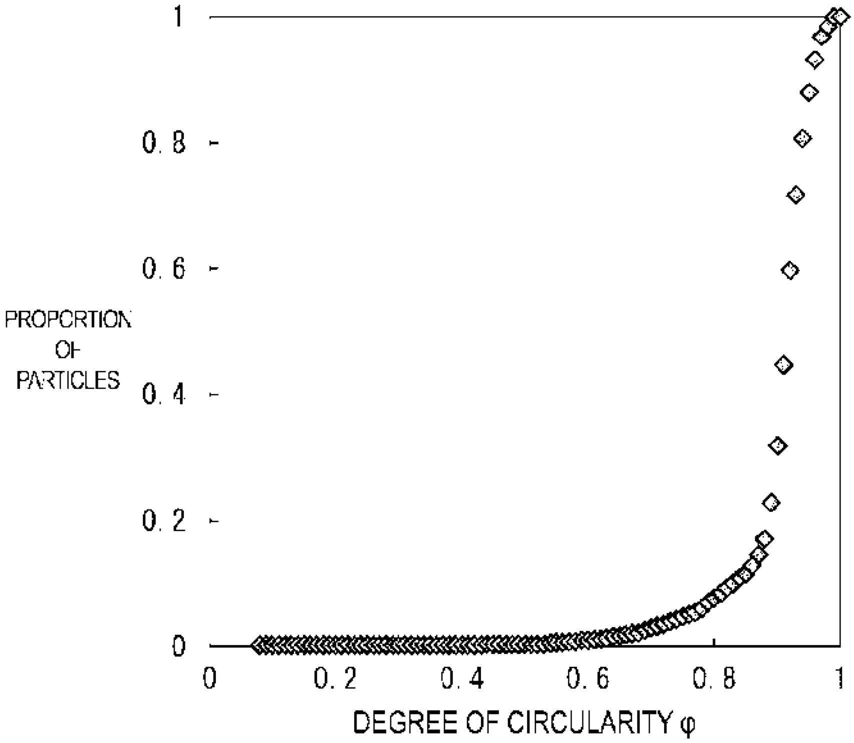
1
0.8
0.6
0.4
0.2
0
PROPORTION OF PARTICLES
0
0.2
0.4
0.6
0.8
1
DEGREE OF CIRCULARITY φ

[FIG. 8]

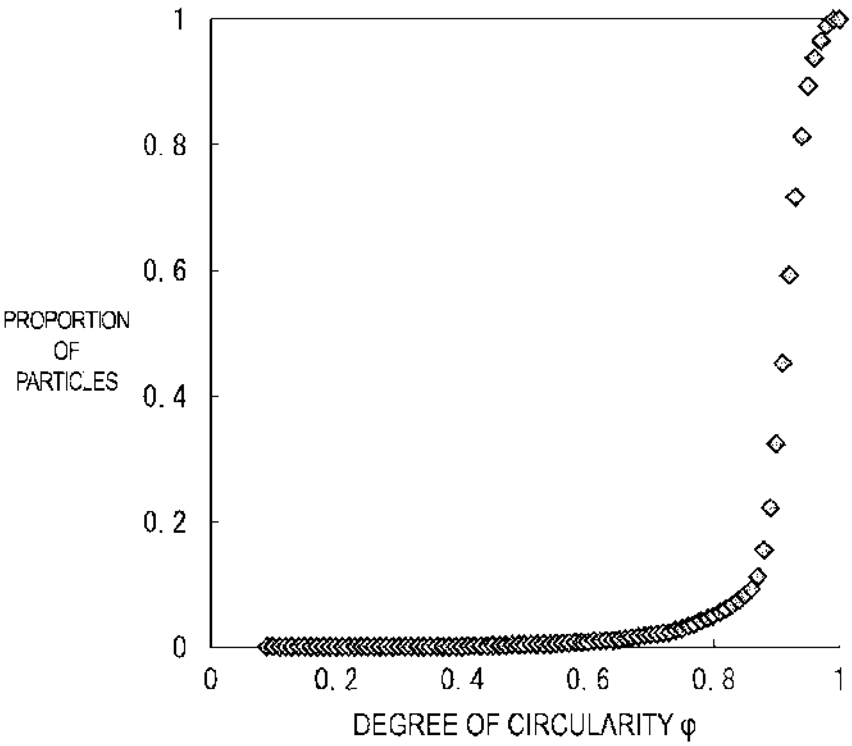
1
0.8
0.6
0.4
0.2
0
PROPORTION OF PARTICLES
0
0.2
0.4
0.6
0.8
1
DEGREE OF CIRCULARITY φ

**INTERNATIONAL SEARCH REPORT**

International application No.
PCT/JP2019/028117

A. CLASSIFICATION OF SUBJECT MATTER
Int.Cl. C08F214/22(2006.01)i, C08F216/14(2006.01)i, C08F220/22(2006.01)i

According to International Patent Classification (IPC) or to both national classification and IPC

B. FIELDS SEARCHED

Minimum documentation searched (classification system followed by classification symbols)
Int.Cl. C08F

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 10-294131 A (ASAHI GLASS CO., LTD.) 04 November 1998, claims, paragraph [0013], example 2 (Family: none) | 1-12 |
| X | JP 2014-65911 A (3M INNOVATIVE PROPERTIES COMPANY) 17 April 2014, claims, paragraphs [0025], [0050], example 2 & US 2010/0121012 A1 (claims, paragraphs [0042], [0069]-[0077], example 2) & WO 2008/140914 A1 & EP 2474564 A2 & CN 101679562 A | 1-12 |
| X | WO 99/28916 A1 (DAIKIN INDUSTRIES, LTD.) 10 June 1999, claims, example 3 & EP 1049108 A1 (claims, example 3) | 1-12 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
25 September 2019 (25.09.2019)

Date of mailing of the international search report
21 October 2019 (21.10.2019)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.
PCT/JP2019/028117

C (Continuation). DOCUMENTS CONSIDERED TO BE RELEVANT

| Category* | Citation of document, with indication, where appropriate, of the relevant passages | Relevant to claim No. |
|---|---|---|
| X | JP 2017-160365 A (KUREHA CORPORATION) 14 September 2017, examples & US 2019/0013547 A1 (examples) & EP 3429017 A1 & KR 10-2018-0069078 A & CN 108370066 A | 1-10, 12 |
| X | WO 2008/132959 A1 (ASAHI GLASS CO., LTD.) 06 November 2008, claims & US 2010/0029878 A1 (claims) & EP 2138515 A1 & CN 101652392 A | 1-10, 12 |
| X | JP 2008-512545 A (3M INNOVATIVE PROPERTIES COMPANY) 24 April 2008, claims, examples 1, 3 & US 2006/0052557 A1 (claims, examples 1, 3) & EP 1634895 A1 & KR 10-2007-0058592 A & CN 101014632 A | 1-12 |
| X | JP 2005-325327 A (DAIKIN INDUSTRIES, LTD.) 24 November 2005, claims, paragraphs [0013], [0029] & WO 2005/007709 A1 | 1-10, 12 |
| X | JP 2000-239470 A (AUSIMONT SPA) 05 September 2000, example 13 & US 2002/0177664 A1 (example 13) & EP 1031607 A1 | 1-12 |
| X | JP 10-272744 A (DAIKIN INDUSTRIES, LTD.) 13 October 1998, claims, production example 1 (Family: none) | 1-12 |
| X | WO 95/33782 A1 (DAIKIN INDUSTRIES, LTD.) 14 December 1995, claims, examples & US 5670593 A (claims, examples) & EP 728776 A1 & KR 10-1996-0703951 A & CN 1129454 A | 1-12 |
| X | JP 3-56516 A (SHIN-ETSU CHEMICAL CO., LTD.) 12 March 1991, claims, example 4 (Family: none) | 1-12 |
| X | JP 2014-74185 A (DAIKIN INDUSTRIES, LTD.) 24 April 2014, claims, production example 2 & US 2011/0112265 A1 (claims, preparation example 2) & WO 2010/002013 A1 & EP 2294121 A1 & CN 102056974 A | 1-12 |
| X | JP 2013-514438 A (3M INNOVATIVE PROPERTIES COMPANY) 25 April 2013, claims, examples & US 2011/0152487 A1 (claims, examples) & WO 2011/084404 A2 & EP 2513219 A1 & KR 10-2012-0094134 A & CN 102753617 A | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012201866 A